# EUROPEAN PATENT SPECIFICATION

(11) **EP 2 200 914 B1**
(45) Date of publication and mention of the grant of the patent: **21.03.2012**
(21) Application number: 08807027.1
(22) Date of filing: 10.09.2008
(51) Int. Cl.: B65G 33/32, A01F 12/46

(54) **AUGER CONVEYORS**
SCHNECKENFÖRDERER
CONVOYEURS À VIS

(30) Priority: 14.09.2007 GB 0717952
(43) Date of publication of application: 30.06.2010
(73) Proprietor: AGCO do Brasil Comércio e Indústria Ltda, CEP-92-420-000, Canoas - RS (BR)
(72) Inventor: HOLLATZ, Brian, Jay, CEP-90035-070 Porto Alegra RS (BR); SORENSEN, Jakob, Bro, DK-8690 Randers SO (DK); BOJSEN, Thomas, Mygind, DK-8900 Randers (DK)
(74) Representative: Morrall, Roger
(86) International application number: PCT/IB2008/002336
(87) International publication number: WO 2009/034442

(56) References cited:
- FR-A- 2 043 688
- JP-A- 3 065 119
- JP-A- 9 154 391
- JP-A- 10 201 354
- JP-A- 10 229 741
- JP-A- 11 196 660
- JP-A- 11 262 323

## Description

The present invention relates to auger conveyors, that is conveyors having one or more auger flights rotating within one or more tubes to convey material along the tube or tubes.

Such conveyors have many fields of application. For example, they can be used to move material such as grain or other material within warehouses or they can be used within mobile machines such as combine harvesters to move grain and other materials such as unseparated straw and chaff etc from one part of the combine to another.

For example, JP 10229741 discloses a anger conveyor according to the preamble of claim 1 and harvester according to the preamble of claim 2. In this harvesting machine, harvested crop is fed horizontal by a first auger flight and then vertically to a discharge spout by a second auger flight. The pitch of the first auger flight is increased as it approaches the second auger flight in order to increase the speed of feeding of the crop as it is conveyed from the first flight into the second flight to reduce the prospect of the augers become blocked in the region where the crop passes from the first to the second flight.

It is an object of the present invention to provide an improved auger conveyor which is capable of conveying material continuously and efficiently and which is particularly suitable for use in a combine harvester.

Thus in accordance with the present invention there is provided an auger conveyor comprising a first auger flight rotating about a first axis within a first tube towards an end of the first tube, part of the first tube adjacent said end being angled away from the first axis to feed the material conveyed by the first flight at an angle to the first axis, and portion of the first auger flight adjacent said end being set to tend to throw material being conveyed by the first flight radially/tangentially away from the first axis into the angled part of the first tube, which feeds the conveyed material into a second tube extending at an angle to the first tube, the material being conveyed along the second tube by a second auger flight rotating about a second axis within the second tube, wherein the two flights are drivingly interconnected by an immediate gearbox and the two tubes being interconnected by a transition housing through which the material travels from the first flight to second flight, characterised in that the transition housing and the final portion of the first tube adjacent the transition housing define a straight edge and cooperate to discharge all the material from the first tube into the transition housing across this edge of the first tube, the portion of the first tube below said edge tending to blank off half of the first flight to ensure that material issued from the first flight is directed generally in the direction towards the second flight and is prevented from being drawn back into the first flight.

The invention also concerns a combine harvester with such an auger conveyor.

The present invention will now be described, by way of example only, with reference to the accompanying drawings in which:-
Figure 1 shows an auger conveyor in accordance with the present invention for use in a combine harvester to move crop tailings generally horizontally and vertically towards a rethreshing device of the combine;
Figure 2 shows the corner portion of the conveyor of Figure 1;
Figure 3 shows a perspective view of the corner of Figure 2 viewed from below, and
Figure 4 and 5 show end and perspective views of a combine rethreshing device, not part of the invention,with part of the housing removed for clarity, which includes an alternative form of auger conveyor to distribute material to the periphery of the housing of the rethreshing device.

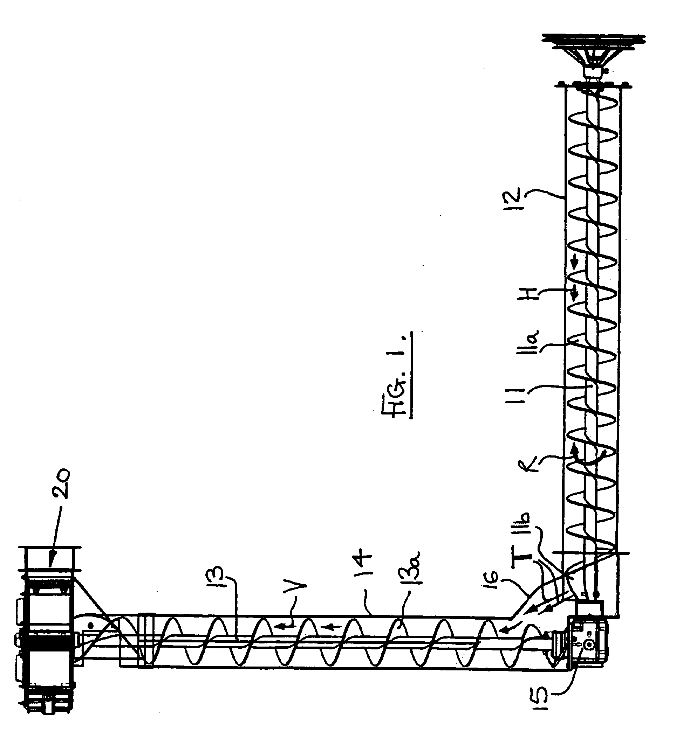

Referring to Figure 1 of the drawings, the angled auger conveyor 10 for use in a combine harvester comprises a first auger flight 11 which is rotated in a first tube 12 and a second auger flight 13 which extends generally perpendicular to flight 1 land is rotated in a second tube 14. The two auger flights 11 and 13 are drivingly interconnected by an intermediate gearbox 15 and the two tubes 12 and 14 are interconnected by a transition housing 16.

In this application of the conveyor the auger flight 11 extends generally transversely relative to the combine and is used to move so-called "tailings" such as small amounts of grain and unseparated chaff and straw etc which has not successfully completed the cleaning/separating process. These "tailings" are conveyed by flights 11 and 13 to a higher position in the combine where they are rethreshed in a rethreshing device 20 so that their separation and cleaning can be completed thus minimizing the grain loss of the associated combine.

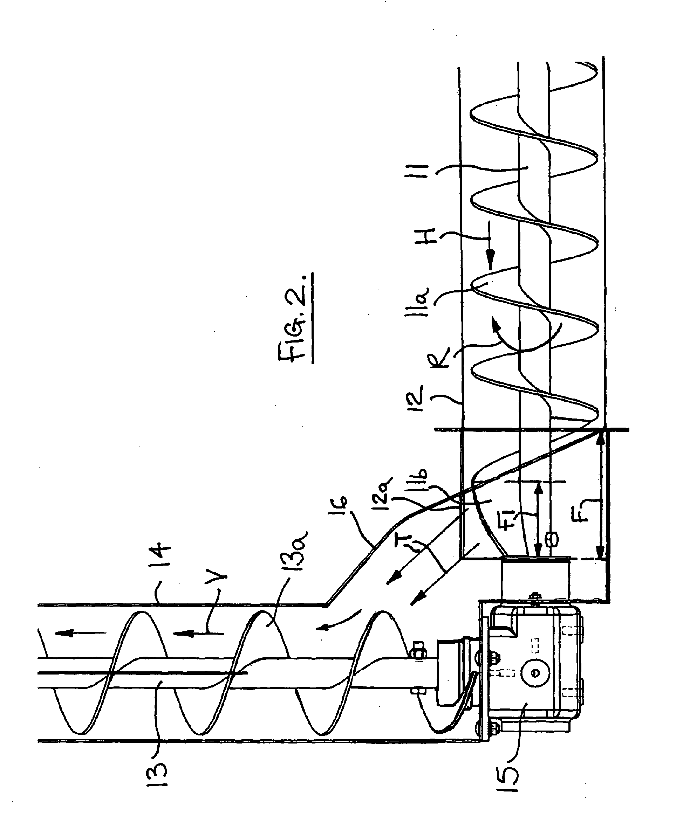

Referring to Figure 2, it can be seen that the main portion of the first auger flight 11 has flights 11a which have relatively short pitch and which convey the tailings generally horizontally as indicated by the arrow H. In the final portion F of the auger flight 11 the pitch of the flights is increased so that the flights tend to move the material more radially/ tangentially. [The longer pitch flights cause a tangential acceleration and get the material spinning around the auger axis so that it can be thrown away from the auger axis to the next auger.] In the very final section F1 of the auger flight the tailings are moved by flights 11 b in the direction T through the transition housing 16 into the second flight 13 which conveys the material in the general direction V using its flights 13a. The material in fact enters the second flight 12 with a long pitch spiral motion due to the rotational motion which the material has picked up in sections F and F1 of the first flight 11.

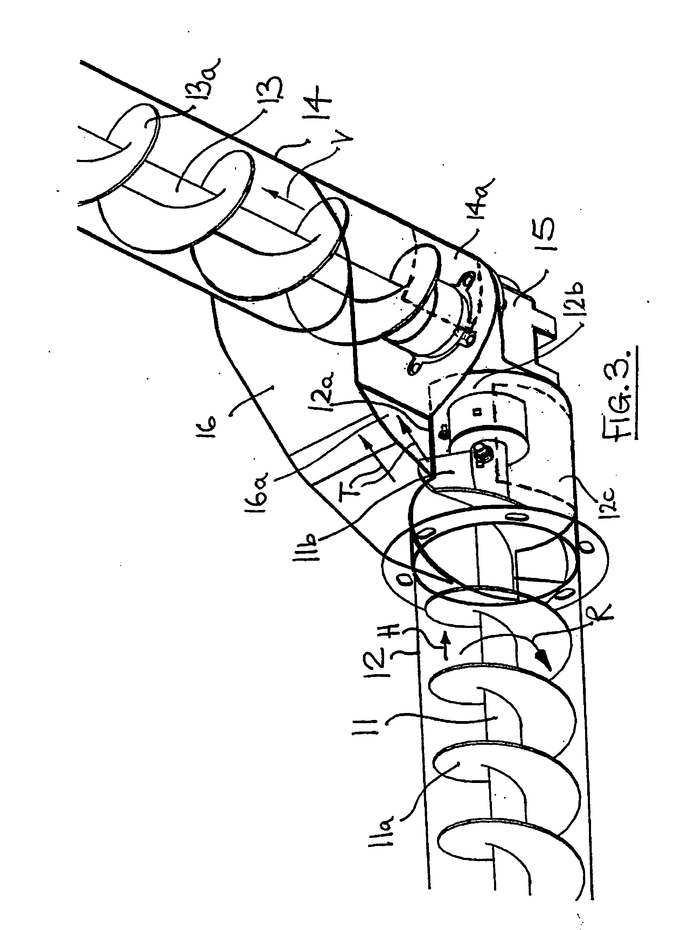

The transition housing 16 has a side wall 16a which extends substantially parallel to the desired direction T of movement of material from first of light 11 to second flight 13. As will be appreciated, if the first flight 11 is rotating in the direction R the material in half of the final section F1 of the flight 11 is tending to move generally towards the second flight 13 whereas the material in the other half of the final section F1 i.e. below the edge 12a of the first tube 12 where side wall 16a meets tube 12 (see Figure 3) is tending to move away from the second flight 13. Thus the portion 12b of the first flight tube 12 below the edge 12a tends to blank off this half of the first flight to ensure that material issuing form the first flight 11 is directed generally in the direction T towards the second flight 13 and is not drawn back into the first flight 11.

By angling the flight section 11b as shown in Figure 2 it will be appreciated that the direction T can be aimed at improving the pick up of the second auger flight 13 and thus greatly increasing the overall efficiency of the conveyor.

For convenience, the tubes 12 and 14 are provided with trap doors 12c and 14a respectively (shown in dotted details in Figure 3) through which the interior of the tubes can be accessed to clear blockages etc which may occur in the vicinity of the transition from the first auger 11 to the second auger 14 and which may also be necessary for routine maintenance, assembly and disassembly.

To ensure efficient overall operation of the conveyor it is desirable that the capacity of the second flight 13 should be greater than the first flight 12 so that the second flight is always capable of moving whatever volume of material may be conveyed thereto to by the first flight thus significantly reducing the likelihood of blockages etc. This can be readily achieved by ensuring that the second auger 13 has a longer flight pitch than the first auger 11. Alternatively the second flight could be run faster than the first with a speed increase in the gearbox 15.

Also, the transition housing 16 and the angle of the final portion 11 b of the flights of the first auger are arranged so that the material leaves the first auger having a relatively low axial speed but a high tangential speed which is directed through the transition housing 16.

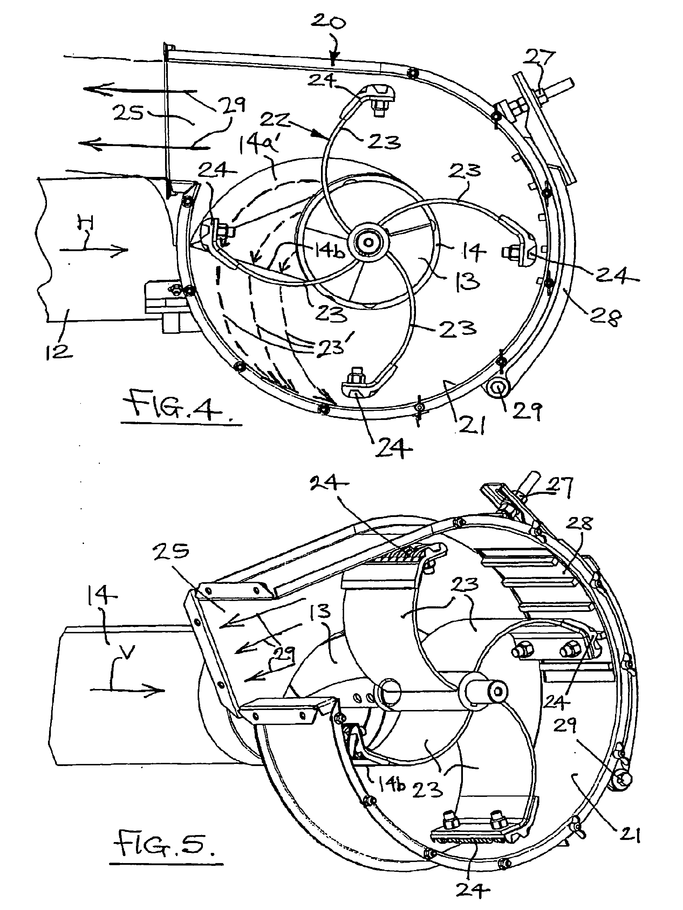

Figures 4 and 5 show details of the tailings rethreshing device 20 which is provided at the upper end of the second tube 14.

As best seen in Figure 4, the upper end of the second tube 14 feeds the tailings into a rethreshing housing 21 within which a rethreshing cylinder 22 rotates. The rethreshing cylinder 22 is mounted on the upper end of the second auger flight 13. The rethreshing cylinder 22 has curved arms 23 which tend to accelerate any material emerging from the upper end of the second tube 14 radially outwardly towards the inner surface of the rethreshing housing 21 since such material tends to move at right angles to its contact point with the curved arms. The material emerging from second tube 14 is then rethreshed between rasp bars 24 on the ends of the arms 23 and the inner surface of the threshing housing. After this rethreshing operation the rethreshed tailings leave the rethresing device via an outlet 25 (see arrows 29) and are sieved again to recover any newly separated grain.

As is conventional, the severity of the rethreshing can be adjusted by moving a so-called rethreshing concave 28 of the rethreshing housing 21 radially relative to the rasp bars 24 using a screw threaded adjustment device 27 which pivots the concave 28 about a pivot axis 29 to adjust the severity of the rethreshing. The concave 28 of the rethreshing housing can also be changed for a concave with a rougher or smoother inner surface to further adjust the severity of the rethreshing.

The upper end of the second tube 14 is flared radially outwardly as indicated by the reference numeral 14a in Figure 4. Also, the latter part of the upper end of the auger 13 is angled (as shown in sections F and F1 of Figure 2 in relation to auger 11) to tend to throw the material radially outwardly in to the flared end portion 14a' of the second tube 14 to assist in rapidly moving the tailings radially outwardly across edge 14b into rcthrcshing device 20 where they can be efficiently rethreshed between the inner surface of the rethreshing housing 21 and the rasp bars 24. The position of the flared and portion 14a ensures that all the tailings reach the inner surface of the housing 21 before the concave 28 (see arrows 23' in figure 4) to ensure correct rethreshing of the tailings.

Although the invention has been described above in relation to use within a combine harvester it will be appreciated that the angled conveyor arrangement shown in figures L to 3 in which material is conveyed along tubes 12 and 14 angled relative to each other is suitable for stationary use within buildings etc to move grain or similar material in an efficient and reliable manner. Similarly the embodiment shown in figures 4 and 5 could be useful anywhere granular material needs to be accelerated outward from the end of an auger to throw it out of a duct.

## Claims

1. An auger conveyor (10) comprising a first auger flight (11) rotating about a first axis within a first tube (12) towards an end of the first tube, part (F1) of the first tube (12) adjacent said end being angled away from the first axis to feed the material conveyed by the first flight at an angle (T) to the first axis, and portion (11 b) of the first auger fligh (11) adjacent said end being set to tend to throw material being conveyed by the first flight (11) radially/tangentially away from the first axis into the angled part of the first tube (12), which feeds the conveyed material into a second tube (14) extending at an angle to the first tube (12), the material being conveyed along the second tube (14) by a second auger flight (13) rotating about a second axis within the second tube (14), wherein the two flights (11,13) are drivingly interconnected by an immediate gearbox (15) and the two tubes (12,14) being interconnected by a transition housing (16) through which the material travels from the first fligh (11) to second flight (13) **characterised in that** the transition housing (16) and the final portion (F1) of the first tube (12) adjacent the transition housing (16) define a straight edge (12a) and cooperate to discharge all the material from the first tube (12) into the transition housing (16) across this edge (12a) of the first tube (12), the portion (12b) of the first tube (12) below said edge (12a) tending to blank off half of the first flight (11) to ensure that material issued from the first flight (11) is directed generally in the direction towards the second flight (13) and is prevented from being drawn back into the first flight (11).

2. A combine harvester **characterised by** including an auger conveyor (10) according to claim 1.

## Patentansprüche

1. Schneckenförderer (10) mit einer ersten Schnecke (11), die in einem ersten Rohr (12) um eine erste Achse rotiert in Richtung eines Endes des ersten Rohres, wobei ein Teil (F1) des ersten Rohres (12) benachbart dem Ende weg von der ersten Achse abgewinkelt ist, um Material, welches von der ersten Schnecke gefördert wird, unter einem Winkel (T) gegenüber der ersten Achse zu fördern, und wobei ein Bereich (11b) der ersten Schnecke (11) benachbart dem Ende geeignet eingerichtet ist, um ein Schleudern von Material, welches durch die erste Schnecke (11) gefördert wird, radial/tangential weg von der ersten Achse in den abgewinkelten Teil des ersten Rohres (12) zu fördern, wodurch gefördertes Material in ein zweites Rohr (14) gefördert wird, welches sich unter einem Winkel gegenüber dem ersten Rohr (12) erstreckt, wobei das Material entlang des zweiten Rohres (14) durch eine zweite Schnecke (13) gefördert wird, die um eine zweite Achse in dem zweiten Rohr (14) rotiert, und wobei die zwei Schnecken (11, 13) antriebsmäßig durch ein Getriebe (15) verbunden sind und die zwei Rohre (12, 14) durch ein Übergangsgehäuse (16) miteinander verbunden sind, durch welches das Material von der ersten Schnecke (11) zu der zweiten Schnecke (13) übertritt, **dadurch gekennzeichnet, dass** das Übergangsgehäuse (16) und der finale Bereich (F1) des ersten Rohres (12) benachbart dem Übergangsgehäuse (16) einen geraden Rand (12a) vorgeben oder bilden und miteinander in Wechselwirkung treten zur Abfuhr sämtlichen Materials von dem ersten Rohr (12) in das Übergangsgehäuse (16) entlang dieses Randes (12a) des ersten Rohres (12), wobei der Bereich (12b) des ersten Rohres (12) unter dem Rand (12a) dazu tendiert, die Hälfte der ersten Schnecke (11) zu verschließen um zu gewährleisten, dass Material, welches von der ersten Schnecke (11) ausgegeben wird, grundsätzlich in die Richtung der zweiten Schnecke (13) ausgerichtet oder geleitet wird und daran gehindert wird, in die erste Schnecke (11) zurückgezogen zu werden.

2. Mähdrescher, **dadurch gekennzeichnet, dass** dieser einen Schneckenförderer (10) nach Anspruch 1 aufweist.

## Revendications

1. Convoyeur à vis (10) comprenant une première vis sans fin (11) tournant autour d'un premier axe à l'intérieur d'un premier tube (12) vers une extrémité du premier tube, une partie (F1) du premier tube (12) adjacente à ladite extrémité étant inclinée à l'écart du premier axe afin de délivrer le matériau convoyé par la première vis sans fin sous un angle (T) par rapport au premier axe, et une partie (1 1b) de la première vis sans fin (11) adjacente à ladite extrémité étant agencée afin de tendre à propulser le matériau qui est convoyé par la première vis sans fin (11) radialement/tangentiellement à l'écart du premier axe dans la partie inclinée du premier tube (12), ce qui délivre le matériau convoyé vers un second tube (14) s'étendant sous un certain angle par rapport au premier tube (12), le matériau étant convoyé suivant le second tube (14) par une seconde vis sans fin (13) tournant autour d'un second axe à l'intérieur du second tube (14), dans lequel les deux vis sans fin (11, 13) sont interconnectées de manière à être entraînées par une boîte de vitesse intermédiaire (15) et les deux tubes (12, 14) sont interconnectés par un logement de transition (16) à travers lequel le matériau se déplace à partir de la première vis sans fim (11) vers la seconde vis sans fin (13),
**caractérisé en ce que** le logement de transition (16) et la partie finale (F1) du premier tube (12) adjacente au logement de transition (16) définissent un rebord rectiligne (12a) et coopèrent afin d'évacuer tout le matériau du premier tube (12) vers le logement de transition (16) à travers ce rebord (12a) du premier tube (12), la partie (12b) du premier tube (12) au-dessous dudit rebord (12a) tendant à masquer la moitié de la première vis sans fin (11) afin d'assurer que le matériau issu de la première vis sans fm (11) soit dirigé sensiblement suivant la direction de la seconde vis sans fin (13) et empêché de revenir dans la première vis sans fin (11).

2. Moissonneuse **caractérisée par le fait qu'**elle comporte un convoyeur à vis (10) selon la revendication 1.
